Europäisches Patentamt

European Patent Office

Office européen des brevets

(19)

(11) Publication number: **0 046 020**
**A2**

(12) **EUROPEAN PATENT APPLICATION**

(21) Application number: **81303343.8**

(22) Date of filing: **22.07.81**

(51) Int. Cl.³: **G 01 D 9/04**

(30) Priority: **25.07.80 GB 8024505**

(43) Date of publication of application:
**17.02.82 Bulletin 82/7**

(84) Designated Contracting States:
**BE CH DE FR GB IT LI LU NL SE**

(71) Applicant: **FERODO LIMITED**
**20 St. Mary's Parsonage**
**Manchester M3 2NL(GB)**

(72) Inventor: **Bennett, James Arnold**
**127 High Hill ROad**
**New Mills Storkport SK12 4HQ(GB)**

(74) Representative: **Crux, John Anthony et al,**
**20 St. Mary's Parsonage**
**Manchester M3 2NL(GB)**

(54) **Improvements in and relating to data recording.**

(57) Analogue data from a plurality of sources is converted to digital form, processed into a multiplexed composite signal and fed to a display device which is programmed to convert the data from selected sources at any particular time into permanent record form as a plurality of side-by-side graphs.

EP 0 046 020 A2

- 1 -

## Improvements in and relating to Data Recording

This invention relates to the acquisition and processing of data from a plurality of sources into the form of a permanent record.

According to the present invention a method of processing into permanent record form substantially simultaneously analogue data from more than one source, comprises the steps of converting said data into digital form, processing the digital data into a multiplexed composite signal, feeding the composite signal to a display device and operating said device to convert the data from selected ones of said sources at any particular time into permanent record form as a plurality of side-by-side graphs.

Preferably, the method also includes the step of programming the display device to convert the data into permanent recordform at selected intervals.

Preferably, the display device is a dot matrix (or mosaic) printer. This avoids the practical problems associated with pen recorders and similar devices, because it is capable of operating at high speed and in the presence of vibration. It also lends itself to microprocessor control, thereby facilitating the task of programming the display device to operate on data from selected sources. This latter feature of selecting those sources which are to be converted into graphs at any particular time is especially useful where the information from one or more of the data sources need only be plotted at intervals. In other words, the permanent record can be made to reflect the priorities involved.

In order that the invention be better understood a preferred embodiment of it will now be described with reference to the accompanying block diagram.

In the diagram, a plurality of analogue data sources, S1 to Sn supply data to an interface ADM comprising an analogue to digital converter and multiplexer. This also contains the hardware necessary to convert the source signals to the appropriate levels before conversion to digital form. The output of the ADM is a composite signal derived from all of the sources. It is fed to a dot matrix printer DMP, through a microprocessor control unit, MC, operated by a program designated, P. The latter comprises a fixed element, stored for example in a read-only-memory, or in an erasable read-only-memory, to permit modification. Such fixed element modification may be necessary when n is changed. P also comprises a user-definable element which permits user selection of the source(s) to be converted into graphical form at any one time, as well as the selection of chart speeds, etc.

The output from the control unit MC consists of the selected source data and instructions to the dot matrix printer logic system. The latter will normally include a pre-programmed character generator and where many graphs are to be plotted side-by-side, it may be necessary to bypass the character generator and drive the printer hammers directly.

One particularly preferred use for the method of the invention lies in the continuous monitoring of the operating characteristics of a vehicle braking system, including such parameters as road speed, brake temperatures, pedal pressure and deceleration rate. Mechanically sensitive chart recorders have proved too vulnerable to vibration, as well as being bulky. Ultra-violet recorders require paper development before the record is available. By contrast, the system and method just described is reliable and gives an immediate plot of all significant parameters as and when they are required.

CLAIMS:-

1.  A method of processing into permanent record form substantially simultaneously analogue data from more than one source, the method being characterised by the steps of converting said data into digital form, processing the digital data into a multiplexed composite signal, feeding the composite signal to a display device and operating said device to convert the data from selected ones of said sources at any particular time into permanent record form as a plurality of side-by-side graphs.

2.  The method of claim 1 characterised in that the display device is programmed to convert the data into permanent record form at selected intervals.

3.  The method of claim 1 or claim 2 characterised in that the display device is a dot matrix printer and the method includes the step of programming said printer to convert the data into a plurality of side-by-side graphs.

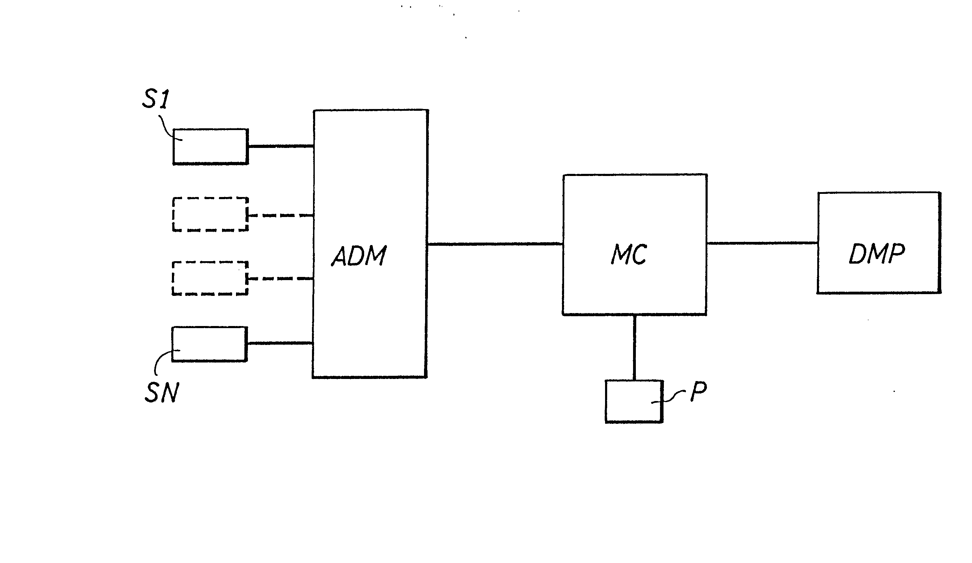

4.  The method of any preceding claim further characterised by the step of passing said composite signal to the display device through a microprocessor-based control unit responsive to fixed and user-definable programme elements.